# EUROPÄISCHE PATENTSCHRIFT

(11) **EP 2 088 823 B1**
(45) Veröffentlichungstag und Bekanntmachung des Hinweises auf die Patenterteilung: **04.03.2015**
(21) Anmeldenummer: 08014814.1
(22) Anmeldetag: 21.08.2008
(51) Int. Cl.: H04W 8/04, H04Q 3/76, H04W 8/26

(54) **Verfahren zur Deregistrierung funktionaler Nummern für Mobilstationen eines Funk-Kommunikationssystems**
Method for deregistering functional numbers for mobile stations of a radio communication system
Procédé de désinscription de numéros fonctionnels pour stations mobiles d'un système de radiocommunication

(30) Priorität: 11.02.2008 DE 102008008654
(43) Veröffentlichungstag der Anmeldung: 12.08.2009
(73) Patentinhaber: DB Netz AG, 60468 Frankfurt am Main (DE)
(72) Erfinder: Masur, Klaus Dieter, 61476 Kronberg (DE)
(74) Vertreter: Zinken-Sommer, Rainer

(56) Entgegenhaltungen:
- US-B1- 6 374 107
- Morane ET AL: "FFFS for Functional Addressing v4.1", , 29. Januar 2007 (2007-01-29), Seiten 1-42, XP055053911, Gefunden im Internet: URL:http://www.era.europa.eu/Document-Regi ster/Documents/Set-1-and-2-Index071-E10T60 01 v4.pdf [gefunden am 2013-02-19]

## Beschreibung

Die Erfindung betrifft ein Verfahren zur verzögerten Deregistrierung funktionaler Nummern für Mobilstationen eines Funk-Kommunikationssystems im Heimatnetz einer eine Deregistrierungsnachricht sendenden Mobilstation.

Der Einsatz sog. "funktionaler Nummern" ist in einem nach dem GSM-R-Standard der europäischen Schienen-Infrastrukturunternehmen betriebenen Mobilfunknetz allgemein üblich. Im Gegensatz zu den physikalischen Rufnummern der einzelnen Endgeräte handelt es sich hierbei um logische Rufnummern, mit denen z.B. die Nutzer der Endgeräte (z.B. der Triebfahrzeugführer eines definierten Zuges) angesprochen werden können. Dies ist insofern vorteilhaft, da infolge wechselnder Dienstpläne die Identitäten der entsprechenden Mitarbeiter (bzw. die physikalischen Rufnummern von deren Endgeräten) fortlaufenden Änderungen unterworfen sind. Durch entsprechende Zuordnungen von physikalischen und logischen (bzw. "funktionalen") Nummern in einer Konkordanzliste (als Bestandteil einer Konfigurations-Datenbank) ist eine eindeutige Identifizierung möglich. Somit muss ein rufender Teilnehmer nur die funktionale Nummer (und nicht die physikalische Zielrufnummer) des gerufenen Teilnehmers kennen. Dieses ist aus betrieblichen Gründen im Eisenbahnbetrieb von Vorteil. Natürlich ergibt sich hieraus die Konsequenz, dass funktionale Nummern in der Konfigurations-Datenbank registriert bzw. deregistriert werden müssen. Dies kann beispielsweise bei Dienstantritt bzw. Dienstende eines Mitarbeiters oder aber beim Grenzübertritt eines mit einem Mobilfunkendgerät (sog. "Cab-Radio") ausgestatteten Schienenfahrzeug der Fall sein.
Nach diesem bekannten Stand der Technik werden bei einem Wechsel eines Mobilfunkendgerätes von einem ersten Mobilfunknetz A in ein zweites Mobilfunknetz B die im ersten Mobilfunknetz A zu einem früheren Zeitpunkt registrierten funktionalen Nummern deregistriert und im zweiten Mobilfunknetz B erneut registriert. Aus dem Stand der Technik sind hierfür besonders einfache Verfahren bekannt, beispielsweise aus der DE 10 2005 033 214.
Es hat sich jedoch als nachteilig erwiesen, dass die Registrierung in einem zweiten Mobilfunknetz bislang stets mit einer nahezu zeitgleichen Deregistrierung im ersten Mobilfunknetz einhergeht.
Aus der US 6,374,107 B1 ist eine zeitverzögerte Deregistrierung im ersten Mobilfunknetz bekannt.

Der Erfindung liegt die Aufgabe zugrunde, ein Verfahren zur verzögerten Deregistrierung funktionaler Nummern für Mobilstationen eines Funk-Kommunikationssystems anzugeben, welches bekannte Deregistrierungsverfahren dahingehend weiterentwickeln soll, dass ein mit einer Mobilstation ausgestatteter Teilnehmer bei einem Wechsel des Mobilfunknetzes - z.B. im Rahmen des grenzüberschreitenden Zugverkehres - für einen vorgebbaren Zeitraum in mehreren GSM-R-Netzen funktional registriert und somit für Anrufer auch ohne Kenntnis des internationalen Codes des jeweiligen GSM-R-Netzes mittels einer funktionalen Adresse erreichbar ist.

Diese Aufgabe wird in Verbindung mit dem Oberbegriff des Patentanspruches 1 erfindungsgemäß dadurch gelöst, dass ein Vergleich zwischen einer Kennung des Ursprungsnetzes der Deregistrierungsnachricht und dem International Code der in einer Konfigurations-Datenbank eines weiteren Netzes zu deregistrierenden funktionalen Nummer durchgeführt wird sowie bei Erkennen einer Differenz zwischen beiden die Deregistrierung der funktionalen Nummer verzögert wird.
Unter einer Deregistrierungsnachricht wird in diesem Zusammenhang eine von einer Mobilstation ausgesendete Nachricht verstanden, mit der die Deregistrierung einer bestimmten funktionalen Nummer in einer Konfigurations-Datenbank angefordert wird. Sowohl die Kennung des Ursprungsnetzes der Deregistrierungsnachricht als auch der International Code der zu deregistrierenden funktionalen Nummer werden in einer dem Heimatnetz der anfordernden bzw. sendenden Mobilstation zugeordneten Datenbank zusammengeführt und in Relation zueinander gesetzt. Diese Relation ermöglicht eine Entscheidung darüber, ob das Ursprungsnetz, aus dem die Mobilstation die Deregistrierungsnachricht abgeschickt hat, mit demjenigen Netz, dem die Konfigurations-Datenbank mit der zu deregistrierenden funktionalen Nummer zugehörig ist, identisch ist. Ein hierbei erkannter Unterschied weist auf einen Wechsel der Mobilstation von einem ersten Netz, in dem zu einem früheren Zeitpunkt eine funktionale Registrierung stattgefunden hatte, in das aktuelle Ursprungsnetz hin.
Die Deregistrierung kann somit durch Veranlassung eines dem Heimatnetz der Mobilstation zugehörigen technischen Systems um einen vorgebbaren Betrag zeitlich verzögert werden. Dieser vorgebbare Betrag der zeitlichen Verzögerung kann beispielsweise auch in Abhängigkeit von der Identität des erkannten Ursprungsnetzes oder der Identität des erkannten "Ziel-Netzes", in dem die Deregistrierung erfolgen soll, jeweils individuell abgewandelt werden.
Auf diese Weise erfüllt die Erfindung auch die Anforderung, dass solche Deregistrierungsnachrichten, die "in herkömmlicher Weise", d.h. also nicht im Zusammenhang mit einem Funknetzwechsel der funktional registrierten Mobilstation, ausgelöst werden, ungehindert und ohne Verzögerung an die Konfigurations-Datenbank gesendet werden.

Das Erfindungskonzept sieht vor, dass die Kennung des Ursprungsnetzes der Deregistrierungsnachricht im Home Location Register HLR des Heimatnetzes aus der Adresse des Visitor Location Register VLR, in dem die Mobilstation aktuell eingebucht ist, extrahiert wird. Hierzu wird zunächst in einem ersten Schritt die im Signalisierungs-Datentelegramm der von der Mobilstation an das Heimatnetz gesendeten Deregistrierungsnachricht enthaltene IMSI (International Mobile Subscriber Identity) als eindeutige Teilnehmer-Identität ausgelesen. In einem zweiten Schritt wird sodann im HLR unter Verwendung dieser IMSI als Abfrage-Schlüssel ein Datensatz ermittelt, der die Adresse des VLR enthält, in dem die Mobilstation zum Zeitpunkt des Absendens der Deregistrierungsnachricht aktuell registriert ist. Diese Adresse des VLR enthält die zur Ermittlung der Kennung des Ursprungsnetzes notwendigen Datenelemente "Country Code CC" und "National Destination Code NDC".

Desweiteren sieht die Erfindung vor, dass der International Code der in einem Netz zu deregistrierenden funktionalen Nummer im Home Location Register HLR des Heimatnetzes aus der Deregistrierungsnachricht extrahiert wird. Gemäß der einschlägigen Spezifikationen (MORANE FFFS for Functional Addressing, Version 4; MORANE FIS for Functional Addressing, Version 5) ist dieser International Code IC Bestandteil der Deregistrierungsnachricht.

Alternative Ausgestaltungen der Erfindung sehen vor, dass entweder die vom Heimatnetz an das weitere Netz zu übertragende Deregistrierungsnachricht zeitlich verzögert wird oder dass ein zusätzliches Datenelement mit der vom Heimatnetz an das weitere Netz zu übertragenden Deregistrierungsnachricht übertragen wird, welches in der Konfigurations-Datenbank des weiteren Netzes eine zeitliche Verzögerung bei der Deregistrierung der funktionalen Nummer auslöst. Natürlich sind auch Mischformen aus beiden Ausgestaltungskonzepten realisierbar.

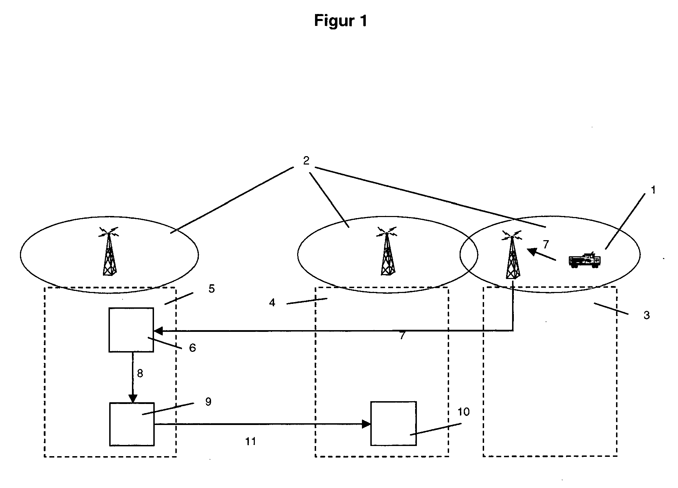

Der Erfindungsgedanke wird in nachfolgendem Ausführungsbeispiel anhand des in Figur 1 dargestellten Schemas erläutert.

Die Mobilstation (1) sendet nach einem Netzwechsel von einem ersten GSM-R Netz A (4) nach einem zweiten GSM-R Netz B (3) sowie einer bereits erfolgten erneuten funktionalen Registrierung in der Konfigurationsdatenbank des GSM-R Netzes B (3) eine Deregistrierungsnachricht (7) an das Home Location Register HLR (6) in ihrem GSM-R Heimatnetz (5). Die Deregistrierungsnachricht (7) beinhaltet den International Code IC der in der Konfigurations-Datenbank (10) im GSM-R Netz A (4) zu deregistrierenden funktionalen Nummer sowie die IMSI. Mittels der IMSI werden im Home Location Register HLR (6) die Datenelemente "Country Code CC" und "National Destination Code NDC" des Ursprungnetzes (3) ermittelt und zusammen mit dem International Code IC an das System zur Erkennung eines Netzwechsel (9) übergeben (8). Der International Code IC sowie die Datenelemete "Country Code CC" und "National Destination Code NDC" werden in einer zugeordneten Datenbank innerhalb des Systems zur Erkennung eines Netzwechsels (9) zusammengeführt und in Relation zueinander gesetzt. Diese Relation ermöglicht eine Entscheidung darüber, ob das Ursprungsnetz (3), aus dem die Mobilstation (1) die Deregistrierungsnachricht (7) abgeschickt hat, mit dem GSM-R Netz A (4), dem die Konfigurations-Datenbank (10) mit der zu deregistrierenden funktionalen Nummer zugehörig ist, identisch ist. Ein hierbei erkannter Unterschied weist auf einen Wechsel der Mobilstation (1) von GSM Netz A (4), in dem zu einem früheren Zeitpunkt eine funktionale Registrierung stattgefunden hatte, in das aktuelle Ursprungsnetz (3) hin. Die Deregistrierungsnachricht (11) wird entweder zeitlich verzögert oder zusammen mit einem zusätzlichen Datenelement an die Konfigurations-Datenbank (10) des GSM-R Netzes A (4) gesendet.

### Bezugszeichenliste

- 1: Mobilstation
- 2: Funkzellen
- 3: Ursprungsnetz; GSM-R Netz "B"
- 4: GSM-R Netz "A"
- 5: GSM-R Heimatnetz der Mobilstation (1)
- 6: Home Location Register HLR
- 7: Deregistrierungsnachricht von Mobilstation (1) an Heimatnetz (5)
- 8: Übergabe der Kennung des Ursprungsnetzes (3) sowie des International Code der in der Datenbank (10) zu deregistrierenden funktionalen Nummer
- 9: System zur Erkennung eines Netzwechsels
- 10: Konfigurations-Datenbank
- 11: Deregistrierungsnachricht von System (9) zur Datenbank (10)

## Patentansprüche

1. Verfahren zur verzögerten Deregistrierung funktionaler Nummern für Mobilstationen eines Funk-Kommunikationssystems im Heimatnetz einer eine Deregistrierungsnachricht sendenden Mobilstation,
**dadurch gekennzeichnet, dass**
ein Vergleich zwischen einer Kennung des Ursprungsnetzes (3) der Deregistrierungsnachricht (7) und dem International Code der in einer Konfigurations-Datenbank (10) eines weiteren Netzes (4) zu deregistrierenden funktionalen Nummer durchgeführt wird sowie bei Erkennen einer Differenz zwischen beiden die Deregistrierung der funktionalen Nummer verzögert wird.

2. Verfahren zur verzögerten Deregistrierung funktionaler Nummern für Mobilstationen eines Funk-Kommunikationssystems nach Patentanspruch 1, **dadurch gekennzeichnet, dass** die Kennung des Ursprungsnetzes (3) der Deregistrierungsnachricht im Home Location Register HLR (6) des Heimatnetzes (5) aus der Adresse des Visitor Location Register VLR, in dem die Mobilstation (1) aktuell eingebucht ist, extrahiert wird.

3. Verfahren zur verzögerten Deregistrierung funktionaler Nummern für Mobilstationen eines Funk-Kommunikationssystems nach Patentanspruch 1 oder 2, **dadurch gekennzeichnet, dass** der International Code der in einem Netz (4) zu deregistrierenden funktionalen Nummer im Home Location Register HLR (6) des Heimatnetzes (5) aus der Deregistrierungsnachricht (7) extrahiert wird.

4. Verfahren zur verzögerten Deregistrierung funktionaler Nummern für Mobilstationen eines Funk-Kommunikationssystems nach einem der Patentansprüche 1 bis 3, **dadurch gekennzeichnet, dass** die vom Heimatnetz (5) an das weitere Netz (4) zu übertragende Deregistrierungsnachricht (11) zeitlich verzögert wird.

5. Verfahren zur verzögerten Deregistrierung funktionaler Nummern für Mobilstationen eines Funk-Kommunikationssystems nach einem der Patentansprüche 1 bis 3, **dadurch gekennzeichnet, dass** ein zusätzliches Datenelement mit der vom Heimatnetz (5) an das weitere Netz (4) zu übertragenden Deregistrierungsnachricht (11) übertragen wird, das in der Konfigurations-Datenbank (10) des weiteren Netzes (4) eine zeitliche Verzögerung bei der Deregistrierung der funktionalen Nummer auslöst.

## Claims

1. A method for the delayed deregistration of functional numbers for mobile stations of a wireless communication system in the home network of a mobile station, said mobile station sending a deregistration message,
**characterized in that**
a comparison is carried out between an identifier of the originating network (3) of the deregistration message (7) and the international code of the functional number, said functional number to be deregistered in a configuration database (10) of another network (4), and **in that** the deregistration of the functional number is delayed if a difference is detected in this comparison.

2. The method for the delayed deregistration of functional numbers for mobile stations of a wireless communication system according to Claim 1, **characterized in that** the identifier of the originating network (3) of the deregistration message in the Home Location Register HLR (6) of the home network (5) is extracted from the address of the Visitor Location Register VLR, in which the mobile station (1) is currently logged in.

3. The method for the delayed deregistration of functional numbers for mobile stations of a wireless communication system according to Claim 1 or 2, **characterized in that** the international code of the functional number to be deregistered in a network (4) in the Home Location Register HLR (6) of the home network (5) is extracted from the deregistration message (7).

4. The method for the delayed deregistration of functional numbers for mobile stations of a wireless communication system according to one of Claims 1 to 3, **characterized in that** the deregistration message (11) to be transmitted from the home network (5) to the other network (4) is delayed in time.

5. The method for the delayed deregistration of functional numbers for mobile stations of a wireless communication system according to one of Claims 1 to 3, **characterized in that** an additional data element is transmitted together with the deregistration message (11), said deregistration message (11) to be transmitted from the home network (5) to the other network (4), wherein this additional data element triggers a time delay in the deregistration of the functional number in the configuration database (10) of the other network (4).

## Revendications

1. Procédé de désenregistrement retardé de numéros fonctionnels pour stations mobiles d'un système de radiocommunication dans le réseau local d'une station mobile envoyant un message de désenregistrement,
**caractérisé en ce**
**qu'**une comparaison entre un identifiant du réseau d'origine (3) du message de désenregistrement (7) et le code international du numéro fonctionnel à désenregistrer dans une banque de données de configuration (10) d'un autre réseau (4) est réalisée et que le désenregistrement du numéro fonctionnel est retardé en cas de détection d'une différence entre les deux.

2. Procédé de désenregistrement retardé de numéros fonctionnels pour stations mobiles d'un système de radiocommunication selon la revendication 1 du brevet, **caractérisé en ce que** l'identifiant du réseau d'origine (3) du message de désenregistrement dans le registre Home Location (emplacement accueil) HLR (6) du réseau local (5) est extrait de l'adresse du registre Visitor Location (emplacement visiteur) VLR dans lequel la station mobile (1) est actuellement inscrite.

3. Procédé de désenregistrement retardé de numéros fonctionnels pour stations mobiles d'un système de radiocommunication selon la revendication 1 ou 2 du brevet, **caractérisé en ce que** le code international du numéro fonctionnel à désenregistrer dans un réseau (4) est extrait, dans le registre Home Location (emplacement accueil) HLR (6) du réseau local (5), du message de désenregistrement (7).

4. Procédé de désenregistrement retardé de numéros fonctionnels pour stations mobiles d'un système de radiocommunication selon une des revendications 1 à 3 du brevet, **caractérisé en ce que** le message de désenregistrement (11) à transmettre par le réseau local (5) à l'autre réseau (4) est retardé chronologiquement.

5. Procédé de désenregistrement retardé de numéros fonctionnels pour stations mobiles d'un système de radiocommunication selon une des revendications 1 à 3 du brevet, **caractérisé en ce qu'**un élément de données supplémentaire est transmis avec le message de désenregistrement (11) à transmettre par le réseau local (5) à l'autre réseau (4), lequel élément de données déclenche, dans la banque de données de configuration (10) de l'autre réseau (4), un retard chronologique lors du désenregistrement du numéro fonctionnel.
